# EUROPÄISCHE PATENTSCHRIFT

(11) **EP 1 334 343 B1**
(45) Veröffentlichungstag und Bekanntmachung des Hinweises auf die Patenterteilung: **05.01.2005**
(21) Anmeldenummer: 01996724.9
(22) Anmeldetag: 13.11.2001
(51) Int. Cl.: G01L 19/06, G01L 19/14

(54) **DRUCKSENSOR UND VERFAHREN ZU DESSEN MONTAGE**
PRESSURE SENSOR AND METHOD FOR MOUNTING THE SAME
CAPTEUR DE PRESSION ET SON PROCEDE DE MONTAGE

(30) Priorität: 15.11.2000 EP 00124299
(43) Veröffentlichungstag der Anmeldung: 13.08.2003
(73) Patentinhaber: Endress + Hauser GmbH + Co. KG., 79689 Maulburg (DE)
(72) Erfinder: FLÖGEL, Karl, 79650 Schopfheim (DE); BURCZYK, Dietfried, 14513 Teltow (DE); VELTEN, Thomas, 66507 Reifenberg (DE); KASTNER, Bernd, 79650 Schopfheim (DE); WOEST, Wolfgang, 79618 Rheinfelden (DE)
(74) Vertreter: Andres, Angelika
(86) Internationale Anmeldenummer: PCT/EP2001/013112
(87) Internationale Veröffentlichungsnummer: WO 2002/040957

(56) Entgegenhaltungen:
- US-A- 5 212 989

## Beschreibung

Die Erfindung bezieht sich auf Absolut- Relativ- und Differenzdrucksensoren mit einer Metallmembran zum Prozess hin. Genauer betrifft die Erfindung ei-nen Drucksensor zur Montage in einem Prozeßanschluß.

Ein Drucksensor mit einer Metallmembran zum Prozess umfasst ein Gehäuse mit einem Durchgang, dessen prozeßseitige Öffnung mit einer Metallmembran verschlossen ist. An der vom Prozeß abgewandten Öffnung des Durchgangs ist der Verformungskörper eines Druckwandlers angeordnet. Der Durchgang ist mit einer Übertragungsflüssigkeit gefüllt, welche den an der Membran anliegenden Druck auf den Verformungskörper des Druckwandlers überträgt, wobei der Druckwandler aufgrund der druckbedingten Auslenkung des Verformungskörpers ein Meß-Signal erzeugt.

Es gibt eine Vielzahl von Varianten solcher Drucksensoren (zB. US-A-5 212 989) mit einer Metallmembran zum Prozeß. Die Zahl der möglichen Varianten ergibt sich als Produkt aus der Zahl der Prozeßanschlüsse bzw. Anschlußelemente und der Zahl der Grundsensoren bzw. Drucksensorelemente. Letztere ist gegeben als Produkt der Zahl der Meßbereiche mit Zahl der Prozeßmembranmaterialien, und der Zahl der verschiedenen Übertragungsflüssigkeiten.

Für eine Drucksensorfamilie ergeben sich leicht mehrere Tausend Varianten. Eine Lagerhaltung aller Varianten ist sehr aufwendig und teuer und ist daher zu vermeiden. Insofern als die Zahl der Prozeßanschlüsse häufig den größten Faktor ausmacht, bietet es sich an, die Drucksensorelemente aus einer Familie vorzufertigen und fertig kalibriert im Lager bereitzuhalten. Je nach Bedarf werden dann ein Drucksensorelement mit einem entsprechenden Anschlußelement verschweißt.

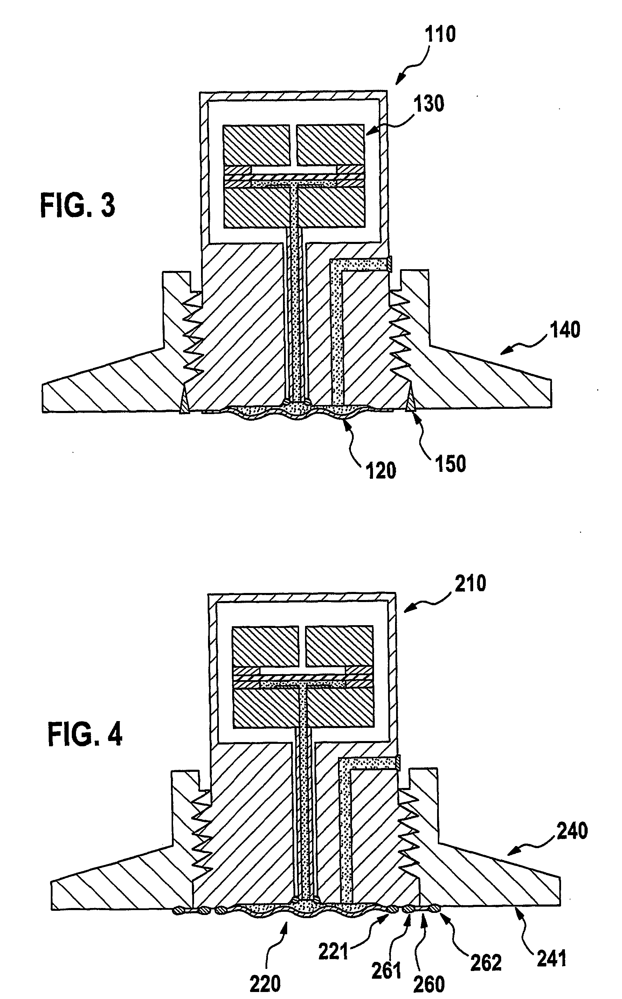

Hierbei erweist es sich als schwierig, das Drucksensorelement zuverlässig mit dem Anschlußelement zu verbinden, ohne die Kalibrierung zu gefährden. Wie in Fig. 3 dargestellt, muß beim Einschweißen des Drucksensorelements 110 in den Anschlußelement 140 die Schweißnaht 150 massiv und tief ausgeführt werden, um dem Prozeßdruck sowie eventuellen Überlastdruckschlägen standzuhalten.

Dies steht im Widerspruch zu der Forderung, die Schweißnaht möglichst dünn und flach zu gestalten, damit keine mechanischen Spannungen in den aktiven Bereich der Prozeßmembran 120 eingebracht werden, denn nur so kann auf eine erneute Kalibrierung des Drucksensorelements verzichtet werden.

Aufgabe der Erfindung ist es, ein Drucksensorelement bereitzustellen, das rückwirkungsfrei in einem Anschlußelement verschweißt werden kann, ohne dabei Kompromisse hinsichtlich der Druckfestigkeit einzugehen.

Die erfindungsgemäße Aufgabe wird gelöst durch das Drucksensorelement gemäß dem unabhängigen Patentanspruch 1, die Drucksensoranordnungen gemäß den Patentansprüchen 8 und 17 sowie das Verfahren gemäß dem unabhängigen Patentanspruch 13. Weitere vorteilhafte Gesichtspunkte der Erfindung ergeben sich aus den abhängigen Ansprüchen, der Beschreibung und den Zeichnungen.

Das erfindungsgemäße Drucksensorelement zur Montage in einem Anschlußelement umfaßt:
ein Druckwandlerelement zur Ausgabe eines druckabhängigen Signals; und einen Trennkörper mit einem Durchgang zwischen einer ersten Öffnung in einer Stirnfläche des Trennkörpers, die sich im wesentlichen senkrecht zur Montagerichtung des Drucksensorelements bis zu ihrem Außenrand erstreckt, und einer zweiten Öffnung in einer zweiten Fläche des Trennkörpers, wobei das Druckwandlerelement über die zweite Öffnung mit dem Durchgang verbunden ist, und einer Membran, welche die erste Öffnung des Durchgangs abdichtet, und einem Übertragungsmedium in dem Durchgang, um den an der Membran anstehenden Druck zum Druckwandlerelement zu übertragen, wobei die Membran sich seitlich über den Außenrand der Stirnfläche des Trennkörpers hinaus erstreckt.

Zur Bereitstellung von Drucksensoranordnungen kann das erfindungsgemäße Drucksensorelement in geeigneten Anschlußelementen rückwirkungsfrei montiert werden, d.h. die Kalibrierung des Drucksensorelements bleibt bei der Montage erhalten.

In einer bevorzugten Ausführungsform wird das Grundsensorelement in eine Öffnung des als Prozeßanschluß ausgebildeten Anschlußelements geschraubt. Hierbei kann ein Spalt zwischen Drucksensorelement bzw. dem Trennkörper des Drucksensorelements und dem Anschlußelement verbleiben welcher von der Membran überdeckt wird. Die Membran wird dann, entlang ihres äußeren Rands, an dem Anschlußelement befestigt.

Die Befestigung ist bevorzugt als eine in sich geschlossene Anschlußnaht insbesondere eine Schweißnaht ausgebildet, es können jedoch auch Lötnähte oder Klebnähte vorgesehen sein.

Insofern als das Sensorelement in der Öffnung des Anschlußelements fixiert ist, und der von der Anschlußnaht eingeschlossene Membranbereich hinreichend elastisch ist, muß die Naht nicht die gesamte an der Öffnung anstehende Druckkraft übertragen.

Somit kann die Befestigung, beispielsweise durch Schweißen, hinreichend schwach ausgelegt werden, daß die Kalibrierung des Drucksensorelements erhalten bleibt.

In einem weiteren Aspekt wird die erfindungsgemäße Lösung dahingehend abgewandelt, daß anstelle eines Drucksensorelementes mit einer überstehenden Membran ein Drucksensorelement mit einer gewöhnlichen Membran verwendet wird, deren Umfang vollständig auf der Stirnfläche des Trennkörpers verläuft. In diesem Fall ist jedoch ein zusätzlicher Membranring vorgesehen. Das Drucksensorelement ist in einer Öffnung in einer Montagefläche eines Anschlußelements angeordnet, und der Membranring wird einerseits mit einer in sich geschlossenen Trennkörpernaht an der Stirnfläche des Trennkörpers und andererseits mit einer in sich geschlossenen Anschlußnaht um die Öffnung an der Montagefläche befestigt.

Zur Fixierung des Drucksensorelements sind generell formschlüssige, kraftschlüssige, oder reibschlüssige Verbindungen zwischen dem Trennkörper und dem Anschlußelement geeignet, wobei formschlüssige Verbindungen bevorzugt sind,

Die Erfindung wird anhand der nachfolgenden Zeichnungen näher erläutert. Es zeigt:
Fig. 1: Einen Längsschnitt durch eine Ausführungsform der erfindungsgemäßen Drucksensoranordnung;
Fig. 2: Einen Längsschnitt durch eine Ausführungsform des erfindungsgemäßen Drucksensorelements;
Fig. 3: Einen Längsschnitt durch eine Drucksensoranordnung nach dem Stand der Technik; und
Fig. 4: Einen Längsschnitt durch eine alternative Ausführungsform der erfindungsgemäßen Drucksensoranordnung.

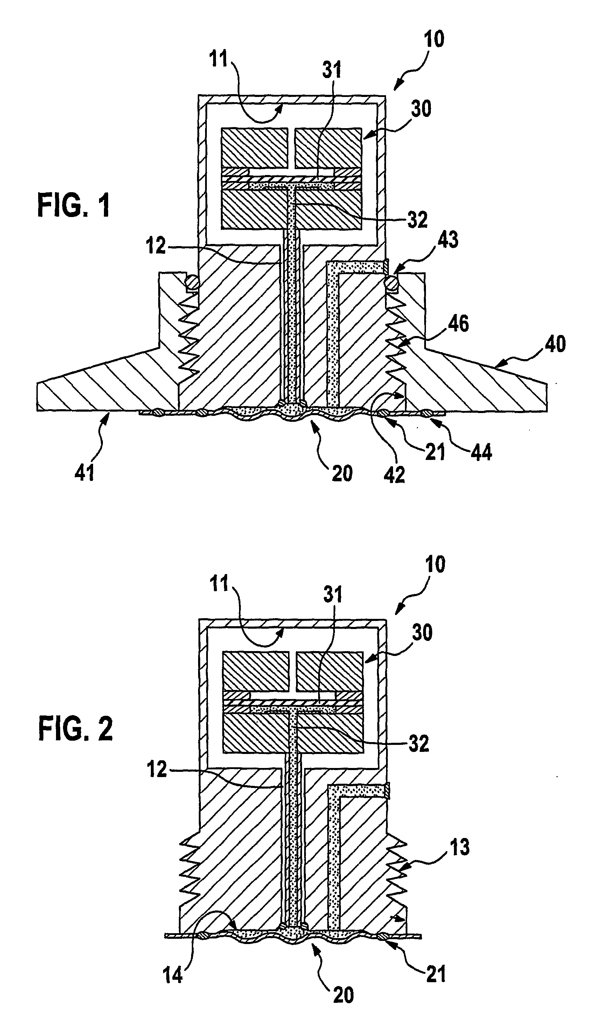

Das in Fig. 2 gezeigte erfindungsgemäße Drucksensorelement umfaßt einen Druckwandler 30 und einen Trennkörper 10, der den Druckwandler 30 vom Prozeßmedium trennt, welches die Membran 20 des Trennkörpers kontaktiert. Die Membran ist auf der Stirnfläche des Trennkörpers entlang einer in sich geschlossenen Trennkörpernaht 21 befestigt, welche eine stirnflächenseitige Öffnung eines im Trennkörper 10 angeordneten Durchgangs 12 gegen das Prozeßmedium abdichtet. Der Durchgang 12 weist eine zweite Öffnung in einer zweiten Fläche des Trennkörpers auf, an welcher das Druckwandlerelement 30 mit dem Durchgang 12 verbunden ist. Der Durchgang 12 ist mit einer Übertragungsflüssigkeit 32 gefüllt.

Beim Betrieb des Drucksensorelements wird die Membran 20 aufgrund des anstehenden Drucks verformt, und die resultierende stirnflächenseitige Volumenänderung wird mittels der Übertragungsflüssigkeit 32 zum Druckwandlerelement 30 übertragen, welches einen Verformungskörper 31 aufweist, der die Volumenänderung aufnimmt. Das Meßsignal wird dann vom Druckwandlerelement 30 in Abhängigkeit der Auslenkung des Verformungskörpers 31 erzeugt.

Als Druckwandlerelement 30 werden besonders bevorzugt kapazitive Wandler oder Wandler mit verformungsabhängigen elektrischen Widerständen eingesetzt.

Bei der in Fig. 2 gezeigten Ausführungsform ist das Druckwandlerelement 30 in ein Gehäuse 11 eingeschlossen, welches in den Trennkörper integriert ist, prinzipiell ist jedoch jede andere Art der Montage des Druckwandlerelements 30 möglich, ohne von der Lehre dieser Erfindung abzuweichen.

Beim Drucksensorelement gemäß Fig. 2 weist die Stirnfläche des Trennkörpers 10 eine Aussparung auf, um ein hinreichend großes druckabhängiges Volumen zwischen der Membran und der Stirnfläche bereitzustellen. In der Figur ist die Aussparung mit einem im wesentlichen ebenen Boden ausgestattet. Der Boden der Aussparung kann jedoch ebenfalls ein Wellenmuster aufweisen, welches parallel zur Wellenstruktur der Membran verläuft. Auf diese Weise kann der mittlere Abstand zwischen der Membran und dem Boden der Aussparung reduziert werden, wodurch das Volumen der Übertragungsflüssigkeit zwischen der Aussparung und der Membran minimiert wird.

In einer Alternative dazu kann sich die Membran leicht gewölbt über einer im wesentlichen flachen Stirnfläche erheben.

Erfindungsgemäß erstreckt sich die Membran 20 seitlich über den Außenrand der Stirnfläche des Trennkörpers 10 hinaus, und zwar in einem solchen Maß, daß die Membran nach der Montage des Drucksensorelements in einem Anschlußelement 40 einen ggf. verbleibenden Spalt zwischen dem Drucksensorelement und dem Anschlußelement 40 überdeckt und an der angrenzenden Fläche 41 des Anschlußelements befestigt werden kann, wie in Fig. 1 gezeigt ist. Die Befestigung erfolgt vorzugsweise mittels einer in sich geschlossenen Anschlußnaht 44, die als Schweißnaht, Lötnaht oder Klebenaht ausgebildet ist.

In der Membran sind zwischen der Trennkörpernaht 21 und der Anschlußnaht 44 gemäß einer anderen Ausführungsform Ausgleichsmittel vorgesehen, um Spannungen auszugleichen, die ggf. auftreten, wenn die Anschlußnaht als Schweißnaht ausgebildet ist. Als Ausgleichsmittel kann mindestens eine in sich geschlossene Erhebungslinie oder Sicke gewählt werden, welche die Trennkörpernaht vollständig umgibt. Vorzugsweise liegt die Erhebungslinie oder Sicke in dem Randbereich der Membran, welcher den Außenrand der Stirnfläche des Trennkörpers 10 überragt.

Das erfindungsgemäße Drucksensorelement kann kalibriert werden, d.h., seine Kenngrößen können festgelegt und eingestellt werden bevor die Montage in einem Anschlußelement erfolgt. Diese Kalibrierung wird durch die nachträgliche Montage des Drucksensorelements in einem Anschlußelement nicht beeinträchtigt, da die Anschlußnaht 44 lediglich den Spalt zwischen dem Trennkörper 10 und der Öffnung 42 abdichten muß, und insofern schwach ausgebildet werden kann. Beim Ausbilden der Anschlußnaht 44 als Schweißverbindung muß daher nur verhältnismäßig wenig thermische Energie aufgebracht werden. Zudem trägt der Spalt zwischen der Stirnfläche desTrennkörpers 10 und der umgebenden Oberfläche 41 des Anschlußelements 40 dazu bei, daß eventuell in der Nähe der Anschlußnaht 44 auftretende Spannungen weitgehend vom Trennkörper 10 isoliert sind.

Der in Fig. 1 dargestellte Trennkörper 10 hat vorzugsweise einen zylindrischen Querschnitt und weist auf seiner Mantelfläche ein Gewinde 13 zum Einschrauben in die Öffnung 42 eines Anschlußelements 40 auf. In einer Ausführungsform ist ein (hier nicht gezeigter) Anschlag vorgesehen, wodurch die Position des Drucksensorelements festgelegt wird. Ein solcher Anschlag kann beispielsweise durch komplementäre axiale Schulterflächen am Trennkörper 10 und in der Öffnung 42 realisiert werden. Wie in Fig. 1 gezeigt, kann eine Verdrehsicherung auch durch eine Schweiß-, Löt-, oder Klebverbindung 43 zwischen dem Drucksensorelement und dem Anschlußelement erzielt werden. Hierbei ist zu beachten daß eine Schweißverbindung möglichst weit entfernt von der Stirnfläche des Trennkörpers auszubilden ist, z.B. zwischen dem von der Stirnfläche abgewandten Endbereich der Mantelfläche des Trennkörpers 10 und der Innenwand der Öffnung 42.

Abgesehen von Gewinden mit einer Verdrehsicherung sind andere formschlüssige oder kraftschlüssige Verbindungen ebenfalls geeignet, die Position des Drucksensorelements in dem Anschlußelement festzulegen.

Insofern als die Membran 21 häufig eine dünne Metallmembran ist, empfiehlt es sich, den überstehenden Randbereich der Membran während der Lagerung der Drucksensorelemente bzw. bei der Montage zu schützen. Hierzu bietet sich u.a. ein Saugadapter an, welcher durch Unterdruck auf der Membran gehalten wird. Bei entsprechender Ausgestaltung, ist dieser Adapter als Werkzeug zur Montage des Drucksensorelementes geeignet. Durch Belüften kann der Saugadapter z.B. nach der Montage ohne Kraftaufwand von der Membran entfernt werden.

Als Alternative zu einem Drucksensorelement mit einer überstehenden Membran ist ein konventionelles Drucksensorelement in Kombination mit einem Membranring zur Verwirklichung der Erfindung geeignet. Eine entsprechende Ausführungsform ist in Fig. 4 gezeigt. Bei dieser Ausführungsform ist das Drucksensorelement mit dem Trennkörper 210 in eine Öffnung in der Fläche 241 eines Anschlußelements 240 geschraubt. Der Trennkörper 210 weist eine Membran 220 auf, deren äußerer Rand vollständig auf der Stirnfläche des Trennkörpers verläuft. Zur Abdichtung des Spalts zwischen der Fläche 241 des Anschlußelements 240 und der Stirnfläche des Trennkörpers ist ein Membranring 260 vorgesehen, der mit einer in sich geschlossenen Trennkörpernaht 261 an der Stirnfläche des Trennkörpers und mit einer in sich geschlossenen Anschlußnaht 261 an der Fläche 241 des Anschlußelements 240 befestigt ist.

Insofern als der Membranring elastisch ist und nur geringe Kräfte zu übertragen hat, ist die Belastung der Anschlußnaht bzw. der Transportnaht ebenfalls gering. Daher können beide Nähte entsprechend schwach dimensioniert sein. Somit ist es möglich die Nähte als Schweißnähte auszubilden ohne die Kalibrierung des Drucksensorelementes zu beeinträchtigen.

Die eben beschriebene Ausführungsform mit einem Membranring vereinfacht einerseits die Handhabung des Drucksensorelements vor der Montage, da keine empfindliche überstehende Membran vorhanden ist, und andererseits kann das Drucksensorelement bei entsprechender Ausgestaltung der Mantelfläche des Trennkörpers von der prozeßabgewandten Seite in die Montageöffnung eines Anschlußelements geschraubt werden.

### Bezugszeichenliste

- 10: Trennkörper
- 11: Gehäuse
- 12: Durchgang
- 13: Gewinde
- 14: Aussparung
- 20: überstehende Membran
- 21: Trennkörpernaht
- 30: Druckwandlerelement
- 31: Verformungskörper
- 32: Übertragungsflüssigkeit
- 40: Anschlußelement
- 41: Öberfläche des Anschlußelements
- 42: Montageöffnung
- 43: Schweißverbindung
- 44: Anschlußnaht
- 46: Gewinde
- 110: Trennkörper
- 120: Membran
- 130: Drucksensorelement
- 140: Anschlußelement
- 150: Massive Schweißnaht
- 210: Trennkörper
- 220: Membran
- 221: Befestigungsnaht der Membran
- 240: Anschlußelement
- 241: Anschlußfläche
- 260: Membranring
- 261: Trennkörpernaht
- 262: Anschlußnaht

## Patentansprüche

1. Drucksensorelement zur Montage in einem Anschlußelement (40), umfassend:
ein Druckwandlerelement (30) zur Ausgabe eines druckabhängigen Signals; und
einen Trennkörper (10) mit
einem Durchgang (12) zwischen einer ersten Öffnung in einer Stirnfläche des Trennkörpers, die sich im wesentlichen senkrecht zur Montagerichtung des Drucksensorelements bis zu ihrem Außenrand erstreckt, und einer zweiten Öffnung in einer zweiten Fläche des Trennkörpers, wobei das Druckwandlerelement über die zweiten Öffnung mit dem Durchgang (12) verbunden ist, und
einer Membran (20), welche die erste Öffnung des Durchgangs (12) abdichtet, und
einem Übertragungsmedium in dem Durchgang (12), um den an der Membran (20) anstehenden Druck zum Druckwandlerelement (30) zu übertragen, **dadurch gekennzeichnet,**
**daß** die Membran (20) sich seitlich über den Außenrand der Stirnfläche des Trennkörpers (10) hinaus erstreckt.

2. Drucksensorelement nach Anspruch 1, wobei der Trennkörper (10) bezüglich der Montagerichtung eine im wesentlichen axialsymmetrische Mantelfläche aufweist.

3. Drucksensorelement nach einem der vorhergehenden Ansprüche, wobei die Membran (20) entlang einer in sich geschlossenen Trennkörpernaht (21) mit der Stirnfläche des Trennkörpers (10) verbunden ist.

4. Drucksensorelement nach Anspruch 3, wobei die Trennkörpernaht (21) als Schweißnaht, als Lotnaht oder als Klebnaht ausgebildet ist.

5. Drucksensorelement nach einem der Ansprüche 1 bis 4, wobei der Trennkörper (10) in seiner Stirnfläche eine Aussparung (14) aufweist, die vollständig von der Trennkörpernaht (21) eingeschlossen ist.

6. Drucksensorelement nach einem der Ansprüche 4 - 5, wobei die Membran (20) außerhalb der von der Trennkörpernaht (21) eingeschlossenen Fläche mindestens eine in sich geschlossene Sicke bzw. Rille oder Wölbung aufweist, welche die Trennkörpernaht (21) umschließt.

7. Drucksensorelement nach einem der vorhergehenden Ansprüche, wobei die Membran (20) eine Metallmembran ist.

8. Drucksensoranordnung umfassend:
ein Drucksensorelement nach einem der vorhergehenden Ansprüche; und
ein Anschlußelement (40) mit einer Öffnung (42) in einer Fläche (41) zur Aufnahme des Drucksensorelements, wobei das Drucksensorelement solchermaßen in der Öffnung (42) fixiert ist, daß die Stirnfläche des Trennkörpers (10) mit dem Randbereich der Fläche (41) um die Öffnung (42) in einer Ebene liegt, weiter **dadurch gekennzeichnet, daß** der überstehende Bereich der Membran (20) mit dem Randbereich der Fläche (41) entlang einer in sich geschlossenen Anschlußnaht (44) um die Öffnung (42) verbunden ist.

9. Drucksensoranordnung nach Anspruch 8, wobei die Anschlußnaht (44) als Schweißnaht, Lotnaht oder Klebnaht ausgebildet ist.

10. Drucksensoranordnung nach Anspruch 8 oder 9, wobei die Innenwand der Öffnung (42) und die Mantelfläche des Trennkopfes (10) zueinander komplementäre Gewinde (46, 13) aufweisen.

11. Drucksensoranordnung nach einem der Ansprüche 8 bis 10, wobei mindestens eine Verdrehsicherung vorgesehen ist, welche ein Verdrehen des montierten Drucksensorelements in der Öffnung (42) verhindert.

12. Drucksensoranordnung nach Anspruch 11 mit mindestens einer Schweißverbindung (43) zwischen dem Drucksensorelement und dem Anschlußelement (40), wobei die Schweißverbindung (43) in einem von der Stirnfläche des Trennkopfes (10) entfernten Abschnitt in der Öffnung (42) ausgebildet ist.

13. Verfahren zur Montage eines Drucksensorelements mit einem Trennkörper welcher eine auf seiner Stirnfläche angeordnete Membran aufweist, die sich seitlich über den Rand der Stirnfläche erstreckt, wobei das Verfahren die folgenden Schritte umfaßt:
(i) Einsetzen des Drucksensorelements in eine Öffnung in einer Anschlußfläche, so daß der Rand der Stirnfläche des Trennkörpers und der die Öffnung umgebende Bereich der Anschlußfläche in einer Ebene liegt; und
(ii) Befestigen der Membran an der Anschlußfläche entlang einer in sich geschlossenen Naht, welche die Öffnung umschließt.

14. Verfahren nach Anspruch 13, wobei die Naht durch Schweißen, Löten oder Kleben gebildet wird.

15. Verfahren nach Anspruch 13 oder 14 zur Montage eines Drucksensorelements nach einem der Ansprüche 1 bis 7.

16. Verfahren nach einem der Ansprüche 13 bis 15, wobei das Drucksensorelement ein vorkalibriertes Drucksensorelement ist.

17. Drucksensoranordnung umfassend:
ein Drucksensorelement, aufweisend
ein Druckwandlerelement zur Ausgabe eines druckabhängigen Signals; und
einen Trennkörper (210) mit
einem Durchgang zwischen einer ersten Öffnung in einer Stirnfläche des Trennkörpers und einer zweiten Öffnung in einer zweiten Fläche des Trennkörpers, wobei das Druckwandlerelement über die zweiten Öffnung mit dem Durchgang (12) verbunden ist, und
einer Membran (220), deren Umfang auf der Stirnfläche des Trennkörpers verläuft und entlang einer in sich geschlossenen Naht an der Stirnfläche befestigt ist, wobei die Membran die erste Öffnung des Durchgangs abdichtet, und
einem Übertragungsmedium in dem Durchgang (12), um den an der Membran (20) anstehenden Druck zum Druckwandlerelement (30) zu übertragen; und
ein Anschlußelement (240) mit einer Öffnung (242) in einer Fläche (241) zur Aufnahme des Drucksensorelements, wobei
das Drucksensorelement solchermaßen in der Öffnung (242) fixiert ist, daß die Stirnfläche des Trennkörpers (210) mit dem Randbereich der Fläche (41) um die Öffnung (42) in einer Ebene liegt, **dadurch gekennzeichnet,**
**daß** die Drucksensoranordnung weiterhin einen Membranring (260) mit einem inneren Randbereich und einem äußeren Randbereich aufweist, wobei der innere Randbereich mittels einer in sich geschlossenen Trennkörpernaht (261) an der Stirnfläche des Trennkörpers (210) und mittels einer in sich geschlossenen Anschlußnaht (262) um die Öffnung (242) an der Fläche (241) des Anschlußelements befestigt ist.

18. Drucksensoranordnung nach Anspruch 17, wobei der Membranring (260) aus dem gleichen Material wie die Membran (220) gebildet ist.

## Claims

1. A pressure sensor element to be mounted in a connecting element (40), comprising:
a pressure transducer element (30) for emitting a pressure-dependent signal; and
a separating body (10) with
a passage (12) between a first opening in an end surface of the separating body, said end surface extending, up to its outer edge, substantially perpendicularly to the mounting direction of the pressure sensor element, and a second opening in a second surface of the separating body, wherein the pressure transducer element is connected to the passage (12) via the second opening, and
a diaphragm (20) which seals off the first opening of the passage (12), and
a transmission medium in the passage (12) for transmitting the pressure on the diaphragm (20) to the pressure transducer element (30), **characterised in that**
the diaphragm (20) extends laterally beyond the outer edge of the end surface of the separating body (10).

2. A pressure sensor element according to claim 1, wherein the separating body (10) has a substantially axially symmetrical outer surface relative to the mounting direction.

3. A pressure sensor element according to either one of the preceding claims, wherein the diaphragm (20) is connected to the end surface of the separating body (10) along a closed separating-body seam (21).

4. A pressure sensor element according to claim 3, wherein the separating-body seam (21) is formed as a weld seam, a soldered seam or a glued seam.

5. A pressure sensor element according to any one of claims 1 to 4, wherein the separating body (10) has, in its end surface, a recess (14) which is completely enclosed by the separating-body seam (21).

6. A pressure sensor element according to either one of claims 4 and 5, wherein the diaphragm (20) has, outside the surface enclosed by the separating-body seam (21), at least one closed bead or groove or convexity surrounding the separating-body seam (21).

7. A pressure sensor element according to any one of the preceding claims, wherein the diaphragm (20) is a metal diaphragm.

8. A pressure sensor arrangement comprising:
a pressure sensor element according to any one of the preceding claims; and
a connecting element (40) with an opening (42) in a surface (41) for receiving the pressure sensor element, wherein the pressure sensor element is fixed in the opening (42) in such a way that the end surface of the separating body (10) lies in one plane with the edge region of the surface (41) around the opening (42), further chara cterised in that the projecting region of the diaphragm (20) is connected to the edge region of the surface (41) along a closed connecting seam (44) around the opening (42).

9. A pressure sensor arrangement according to claim 8, wherein the connecting seam (44) is formed as a weld seam, a soldered seam or a glued seam.

10. A pressure sensor arrangement according to claim 8 or 9, wherein the inner wall of the opening (42) and the outer surface of the separating head (10) have mutually complementary threads (46, 13).

11. A pressure sensor arrangement according to any one of claims 8 to 10, wherein at least one anti-rotation means is provided which prevents rotation of the mounted pressure sensor element in the opening (42).

12. A pressure sensor arrangement according to claim 11 with at least one welded joint (43) between the pressure sensor element and the connecting element (40), wherein the welded joint (43) is formed in the opening (42) in a portion remote from the end surface of the separating head (10).

13. A method of mounting a pressure sensor element comprising a separating body provided with a diaphragm which is arranged on its end surface and which extends laterally beyond the edge of the end surface, wherein the method comprises the steps of:
(i) inserting the pressure sensor element into an opening in a connecting surface so that the edge of the end surface of the separating body and the region of the connecting surface surrounding the opening lie in one plane; and
(ii) fixing the diaphragm to the connecting surface along a closed seam surrounding the opening.

14. A method according to claim 13, wherein the seam is formed by welding, soldering or gluing.

15. A method according to claim 13 or 14 for mounting a pressure sensor element according to any one of claims 1 to 7.

16. A method according to any one of claims 13 to 15, wherein the pressure sensor element is a precalibrated pressure sensor element.

17. A pressure sensor arrangement comprising:
a pressure sensor element having
a pressure transducer element for emitting a pressure-dependent signal; and
a separating body (210) with
a passage between a first opening in an end surface of the separating body and a second opening in a second surface of the separating body, wherein the pressure transducer element is connected to the passage (12) via the second opening, and
a diaphragm (220), the circumference of which extends on the end surface of the separating body and is fixed to the end surface along a closed seam, the diaphragm sealing off the first opening of the passage, and
a transmission medium in the passage (12) for transmitting the pressure on the diaphragm (20) to the pressure transducer element (30); and
a connecting element (240) with an opening (242) in a surface (241) for receiving the pressure sensor element, wherein
the pressure sensor element is fixed in the opening (242) in such a way that the end surface of the separating body (210) lies in one plane with the edge region of the surface (41) around the opening (42), **characterised in that**
the pressure sensor arrangement further has a diaphragm ring (260) with an inner edge region and an outer edge region, the inner edge region being fixed to the end surface of the separating body (210) by means of a closed separating-body seam (261) and being fixed to the surface (241) of the connecting element by means of a closed connecting seam (262) around the opening (242) in the surface (241).

18. A pressure sensor arrangement according to claim 17, wherein the diaphragm ring (260) is formed from the same material as the diaphragm (220).

## Revendications

1. Elément capteur de pression pour le montage dans un élément de connexion (40) comprenant :
un élément convertisseur de pression (30) pour l'émission d'un signal dépendant de la pression ; et un corps de séparation (10) avec
un passage (12) entre un premier orifice dans une surface frontale du corps de séparation, qui s'étend essentiellement de façon perpendiculaire par rapport à la direction de montage de l'élément capteur de pression jusqu'à son bord extérieur, et un deuxième orifice dans une deuxième surface du corps de séparation ; l'élément convertisseur de pression étant relié au passage (12) via le deuxième orifice, et
une membrane (20) qui rend étanche le premier orifice du passage (12), et
un moyen de transmission dans le passage (12) pour transmettre la pression présente dans la membrane (20) à l'élément convertisseur de pression (30), **caractérisé en ce que**,
la membrane (20) s'étend latéralement sur le bord extérieur de la surface frontale du corps de séparation (10).

2. Elément capteur de pression selon la revendication 1, où le corps de séparation (10) présente une surface d'enveloppe essentiellement symétrique axial par rapport à la direction de montage.

3. Elément capteur de pression selon une des revendications précédentes, où la membrane (20) est reliée avec la surface frontale du corps de séparation (10) le long d'un joint de corps de séparation (21) fermé.

4. Elément capteur de pression selon la revendication 3, où le joint de corps de séparation (21) est formé en tant que joint de soudure, que joint de brasage ou en tant que joint de collage.

5. Elément capteur de pression selon une des revendications 1 à 4, où le corps de séparation (10) présente dans sa surface frontale un évidement (14) qui est totalement inclus par le joint de corps de séparation (21).

6. Elément capteur de pression selon une des revendications 4-5, où la membrane (20) située à l'extérieur de la surface renfermée par le joint de corps de séparation (21) présente une ondulation, respectivement une rainure ou un bombement qui comprend le joint de corps de séparation (21).

7. Elément capteur de pression selon une des revendications précédentes, où la membrane (20) est une membrane métallique.

8. Dispositif capteur de pression comprenant :
un élément de connexion (40) avec un orifice (42) dans une surface (41) pour la réception de l'élément capteur de pression ; l'élément capteur de pression étant fixé de cette façon dans l'orifice (42) pour que la surface frontale du corps de séparation (10) se trouve dans un plan avec la zone de bord de la surface (41), autour de l'orifice (42), **caractérisé en outre, en ce que** la zone de la membrane (20) est relié avec la zone de bord de la surface (41) le long d'un joint de connexion (44) fermé autour de l'orifice (42).

9. Dispositif capteur de pression selon la revendication 8, où le joint de connexion (44) est formé en tant que joint de soudure, joint de brasage ou joint de collage.

10. Dispositif capteur de pression selon la revendication 8 ou 9, où la paroi interne de l'orifice (42) et la surface d'enveloppe de la tête de séparation (10) présentent des filetages (46, 13) complémentaires l'un par rapport à l'autre.

11. Dispositif capteur de pression selon une des revendications 8 à 10, où on a prévu au moins une sécurité anti-torsion qui empêche une rotation de l'élément capteur de pression dans l'orifice (42).

12. Dispositif capteur de pression selon la revendication 11 avec au moins une liaison de soudure (43) entre l'élément capteur de pression et l'élément de connexion (40) ; où la liaison de soudure (43) est formée dans un tronçon éloigné de la surface frontale de la tête de séparation (10), dans l'ouverture (42).

13. Procédé pour le montage d'un élément capteur de pression avec un corps de séparation qui présente une membrane disposée sur la surface frontale qui s'étend latéralement sur le bord de la surface frontale ; le procédé comprenant les étapes suivantes :
(i) introduction de l'élément capteur de pression dans un orifice dans une surface de connexion, de manière à ce que le bord de la surface frontale du corps de séparation et la zone entourant l'orifice de la surface de connexion se trouvent dans un plan ; et
(ii) fixation de la membrane sur la surface de connexion le long d'un joint fermé entourant l'ouverture.

14. Procédé selon la revendication 13, où le joint est formé par soudure, brasage ou collage.

15. Procédé selon la revendication 13 ou 14 pour le montage d'un élément capteur de pression selon une des revendications 1 à 7.

16. Procédé selon une des revendications 13 à 15, où l'élément capteur de pression est un élément capteur de pression pré-calibré.

17. Dispositif capteur de pression comprenant :
un élément capteur de pression montrant un élément convertisseur de pression pour l'émission d'un signal dépendant de la pression ; et
un corps de séparation (210) avec
un passage entre un premier orifice dans une surface frontale du corps de séparation et un deuxième orifice dans une deuxième surface du corps de séparation, l'élément convertisseur de pression étant relié au passage (12) via le deuxième orifice, et
une membrane (220) dont la circonférence s'étend sur la surface frontale du corps de séparation et est fixée le long d'un joint fermé sur la surface frontale, la membrane rendant étanche le premier orifice du passage, et
un moyen de transmission dans le passage (12) pour transmettre la pression présente sur la membrane vers l'élément convertisseur de pression (30) ; et
un élément de connexion (240) avec un orifice (242) dans une surface (241 ) pour la réception de l'élément capteur de pression, où
l'élément capteur de pression est fixé dans l'orifice (242) de manière à ce que la surface frontale du corps de séparation (210) se trouve dans un plan avec la zone de bord de la surface (241) autour de l'orifice (42), **caractérisé en ce que**,
le dispositif capteur de pression présente en outre, un anneau de
membrane (260) avec une zone de bord intérieure et une zone de bord extérieure ; la zone de bord intérieure étant fixée au moyen d'un joint de corps de séparation (261) fermé sur la surface frontale du corps de séparation (210) et au moyen d'un joint de connexion (262) fermé autour de l'orifice (242) sur la surface (241) de l'élément de connexion.

18. Dispositif capteur de pression selon la revendication 17, où l'anneau de membrane (260) est formé à partir du même matériau que la membrane (220).
